# FASCICULE DE BREVET EUROPEEN

(11) **EP 1 820 239 B1**
(45) Date de publication et mention de la délivrance du brevet: **02.05.2012**
(21) Numéro de dépôt: 05817055.6
(22) Date de dépôt: 30.11.2005
(51) Int. Cl.: H01R 13/642, H01R 13/00

(54) **DISPOSITIF DE RACCORDEMENT ELECTRIQUE ET PNEUMATIQUE**
ELEKTRISCHE UND PNEUMATISCHE VERBINDUNGSEINRICHTUNG
ELECTRICAL AND PNEUMATIC CONNECTION DEVICE

(30) Priorité: 07.12.2004 FR 0413021
(43) Date de publication de la demande: 22.08.2007
(73) Titulaire: THALES, 92200 Neuilly sur Seine (FR)
(72) Inventeur: SIMEON, Marc, F-41160 Morée (FR); PINEAU, Jean-Philippe, F-41190 LANDES LE GAULOIS (FR); BRIZION, Jean-Claude, F-41100 VILLIERSFAUX (FR)
(74) Mandataire: Collet, Alain
(86) Numéro de dépôt international: PCT/EP2005/056340
(87) Numéro de publication internationale: WO 2006/061344

(56) Documents cités:
- DE-A1- 2 843 247
- US-A- 5 658 159
- US-A- 5 865 329
- US-A1- 2002 058 436
- US-B1- 6 705 478

## Description

L'invention concerne un dispositif de raccordement entre un équipement et deux câbles dont un conduit des informations électriques et l'autre des informations pneumatiques. L'invention trouve une utilité particulière dans le raccordement d'une sonde anémo-barométrique montée sur la peau d'un aéronef. Ce type de sonde réalise des mesures de pression de l'air entourant l'aéronef au moyen de prises de pression situées sur la sonde et de capteurs situés à l'intérieur de l'aéronef. Pour assurer le raccordement entre les prises de pression et les capteurs, la sonde comporte une embase pneumatique sur laquelle vient s'enficher une fiche pneumatique raccordée aux capteurs par l'intermédiaire d'un cordon. Par ailleurs, les vols de l'aéronef en haute altitude imposent un réchauffage de la sonde, par exemple au moyen d'une résistance chauffante noyée dans la sonde. L'alimentation électrique de la résistance est assurée, côté sonde par une embase électrique et côté aéronef par un cordon se terminant par une fiche électrique connectée à l'embase électrique.

A ce jour, le raccordement des deux fiches, électrique et pneumatique, se fait de façon indépendante. La détection d'un mauvais raccordement électrique est relativement facile à réaliser. On peut, par exemple, mesurer la résistance d'un organe électrique, en l'occurrence la résistance chauffante, situé dans la sonde par l'intermédiaire du cordon électrique.

La vérification du bon raccordement de la fiche pneumatique sur son embase est beaucoup plus difficile à réaliser. Une mesure pneumatique ne permet pas de s'assurer du bon raccordement de la fiche pneumatique. Une autre solution consiste à vérifier la continuité électrique du corps de la fiche pneumatique par rapport au corps de son embase. Cette solution n'est généralement pas compatible avec les normes aéronautiques qui imposent aux connecteurs pneumatiques d'être isolés électriquement.

L'invention a pour but de pallier ce problème en proposant d'informer sur l'état d'un branchement pneumatique sans passer par la vérification de la continuité électrique de la connexion pneumatique.

US 5 865 329 décrit un dispositif de raccordement selon le préambule de la revendication 1.

A cet effet, l'invention a pour objet un dispositif de raccordement selon la revendication 1. comportant une embase électrique et une embase pneumatique toutes deux solidaires d'un équipement, une fiche électrique solidaire d'un câble, la fiche électrique étant destinée à être raccordée sur l'embase électrique, une fiche pneumatique solidaire d'un câble, la fiche pneumatique étant destinée à être raccordée sur l'embase pneumatique, caractérisé en ce qu'une position raccordée et déverrouillée de la fiche pneumatique empêche l'enfichage de la fiche électrique.

L'invention sera mieux comprise et d'autres avantages apparaîtront à la lecture de la description détaillée d'un mode de réalisation donné à titre d'exemple, description illustrée par le dessin joint dans lequel :
la figure unique représente un dispositif de raccordement conforme à l'invention.

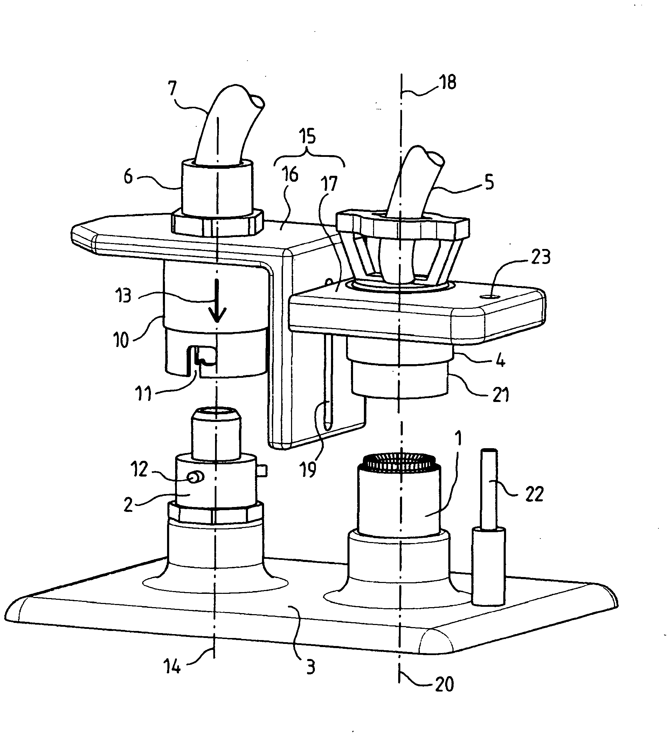

Le dispositif représenté sur la figure 1 comporte une embase électrique 1 et une embase pneumatique 2 toutes deux solidaires d'un équipement 3 dont seule la partie proche des embases 1 et 2 a été représentée. Le dispositif comporte également une fiche électrique 4 solidaire d'un câble 5. La fiche 4 est destinée à être raccordée sur l'embase électrique 1. Le dispositif comporte aussi une fiche pneumatique 6 solidaire d'un câble 7. La fiche 6 est destinée à être raccordée sur l'embase pneumatique 2. L'embase 1 et la fiche 4 forment une connexion électrique. L'embase 2 et la fiche 6 forment une connexion pneumatique.

Les câbles 5 et 7 sont connectés à leurs extrémités non raccordées aux fiches 4 et 6 à un appareil, non représenté sur la figure, appareil comportant au moins un capteur de pression traitant une information pneumatique transitant par la connexion pneumatique et un équipement traitant une information électrique transitant par la connexion électrique. Cet équipement alimente par exemple une résistance chauffante disposée à l'intérieur de l'équipement 3.

Le dispositif comporte en outre des moyens pour empêcher le raccordement de la fiche 4 sur l'embase électrique 1 tant que la fiche pneumatique 6 n'est pas verrouillée sur son embase 2. Le seul fait que la fiche pneumatique 6 soit raccordée sur son embase 2 ne suffit pas à autoriser le raccordement de la fiche électrique 4 sur son embase 1. Pour permettre le raccordement électrique il est nécessaire que la fiche pneumatique 6 soit à la fois raccordée et verrouillée. Ainsi la mise en place de la connexion électrique permet de s'assurer de la mise en place de la connexion pneumatique. Le dispositif est par exemple mis en oeuvre à bord d'un aéronef pour raccorder une sonde anémo-barométrique formant l'équipement 3 et permettant de déterminer des paramètres de vol tels que par exemple la vitesse ou l'incidence de l'air par rapport à l'aéronef. Il est aisé de générer une information sur la mise en place correcte de la connexion électrique, par exemple en mesurant la continuité électrique entre l'embase électrique 1 et le corps de la fiche électrique 4. On peut aussi mesurer la résistance d'un organe électrique appartenant à la sonde, organe connecté au travers de la connexion électrique. Cette information est représentative de l'état de la connexion électrique et par conséquent de l'état de la connexion pneumatique. L'information est ensuite transmise au pilote de l'aéronef ou aux services de maintenance, par exemple sous forme d'un voyant ou d'une alarme, leur indiquant si les deux connexions de la sonde, pneumatique et électrique, sont correctement mises en place.

Avantageusement, la fiche pneumatique 6 comporte une bague de verrouillage 10 sur l'embase 2. La bague de verrouillage est avantageusement du type à verrouillage rapide. La bague 10 comporte par exemple des gorges 11 coopérant avec des doigts 12 appartenant à l'embase 2 pour assurer un verrouillage connu sous le nom de verrouillage à baïonnette. La fiche pneumatique 6 s'enfiche sur l'embase pneumatique 2 selon une direction 13 portée par un axe 14. La bague de verrouillage 10 peut tourner autour de l'axe 14 entre une position déverrouillée et une position verrouillée. Pour verrouiller la fiche 6 sur l'embase 2, on enfonce les doigts 12 dans les gorges 11 suivant la direction 13 puis on tourne la bague 10 autour de l'axe 14. Avantageusement, la fiche électrique 4 est solidaire de la bague de verrouillage 10 par l'intermédiaire d'un support 15. Le support 15 tourne en même temps que la bague 10 lors du verrouillage de la fiche pneumatique 6. Le support 15 comporte deux parties 16 et 17. La partie 16 est fixée à la bague 10. La partie 17 est libre en translation par rapport à la partie 16 selon un axe 18 parallèle à l'axe 14. La fiche électrique 4 est fixée sur la partie 17. L'axe 18 est l'axe d'enfichage de la fiche électrique 4. La partie 16 comporte par exemple une glissière 19 orientée selon l'axe 18 et recevant la partie 17. La glissière 19 permet la translation de la partie 17 par rapport à la partie 16. L'embase électrique 1 a un axe 20 d'enfichage. Pour obtenir l'enfichage de la fiche 4 sur l'embase 1 il est nécessaire que les axes 18 et 20 soit concourants. Ceci n'est obtenu que lorsque la bague 10 est en position verrouillée sur l'embase pneumatique 2. Lorsque les axes 18 et 20 sont concourants, on peut faire glisser la fiche électrique 4 et la partie 17 dans la glissière le long des axes 18 et 20 pour mettre en place la connexion électrique. Il est possible de verrouiller la connexion électrique au moyen d'une bague de verrouillage 21 libre en rotation par rapport à la fiche 4 autour de l'axe 18. La bague 21 peut assurer un verrouillage à baïonnette ou à vis de la fiche 4 sur l'embase 1.

L'amplitude du mouvement de translation de la fiche électrique 4 par rapport à la bague de verrouillage 10 est limité de telle sorte qu'il est impossible de raccorder la fiche électrique 4 sur son embase 1 tant que la connexion pneumatique n'est pas verrouillée.

Le procédé d'établissement des deux connexions s'enchaîne de façon suivante :
- raccorder la fiche pneumatique 6 sur l'embase pneumatique 2,
- puis verrouiller la fiche pneumatique 6 sur l'embase pneumatique 2,
- puis raccorder la fiche électrique 4 sur l'embase électrique 1.

Lors du désenfichage des deux connexions, il est nécessaire de désenficher la fiche électrique 4 pour pouvoir déverrouiller la fiche pneumatique 6.

Le procédé de déconnexion s'enchaîne de façon suivante :
- déconnecter la fiche électrique 4 de l'embase électrique 1,
- puis déverrouiller la fiche électrique 4 de l'embase électrique 1,
- puis déconnecter la fiche pneumatique 6 de l'embase pneumatique 2.

Avantageusement, le dispositif comporte des moyens pour empêcher l'enfichage de la fiche électrique 4 si l'orientation angulaire de la fiche électrique 4 par rapport à l'embase 1 autour de l'axe 18 n'est pas correct, c'est à dire une orientation permettant le raccordement électrique de la fiche électrique 4 sur son embase 1. Ces moyens comportent par exemple un doigt 22 fixé à l'équipement 3 et s'étendant parallèlement à l'axe 20. Lorsque la connexion pneumatique est verrouillée et que par conséquent les axes 18 et 20 sont concourants, le doigt 22 peut pénétrer dans un trou 23 ménager dans la partie 17. Ceci permet d'éviter qu'on puisse réaliser la connexion électrique sans avoir au préalable réalisé la connexion pneumatique. Certains connecteurs électriques sont déjà pourvus de détrompeurs angulaires et il n'est pas nécessaire de prévoir le doigt 22 et le trou 23 correspondant.

## Revendications

1. Dispositif de raccordement comportant une embase électrique (1) et une embase pneumatique (2) toutes deux solidaires d'un équipement (3), une fiche électrique (4) solidaire d'un câble (5), la fiche électrique (4) étant destinée à être raccordée sur l'embase électrique (1), une fiche pneumatique (6) solidaire d'un câble (7), la fiche pneumatique (6) étant destinée à être raccordée sur l'embase pneumatique (2), une position raccordée et déverrouillée de la fiche pneumatique (6) empêchant l'enfichage de la fiche électrique (4) **caractérisé en ce qu'**il comporte des moyens (22, 23) pour empêcher l'enfichage de la fiche électrique (4) si l'orientation angulaire de la fiche électrique (4) par rapport à l'embase (1) autour d'un axe d'enfichage (18) de la fiche électrique (4) n'est pas correct.

2. Dispositif selon la revendication 1, **caractérisé en ce que** la fiche pneumatique (6) comporte une bague de verrouillage (10) sur l'embase pneumatique (2), et **en ce que** la fiche électrique (4) est solidaire de la bague de verrouillage (10).

3. Dispositif selon la revendication 2, **caractérisé en ce que** la fiche pneumatique (6) s'enfiche sur l'embase pneumatique (2) selon une direction (13) portée par un axe (14), **en ce que** la bague de verrouillage (10) est du type à verrouillage rapide, **en ce que** la bague de verrouillage (10) peut tourner autour de l'axe (14) entre une position déverrouillée et une position verrouillée, **en ce que** lorsque la bague de verrouillage (10) est position verrouillée, un axe d'enfichage (18) de la fiche électrique (4) coïncide avec un axe d'enfichage (20) de l'embase électrique (1).

## Claims

1. A connection device comprising an electrical socket (1) and a pneumatic socket (2) both integral with an item of equipment (3), an electrical plug (4) integral with a cable (5), said electrical plug (4) being designed to be connected to the electrical socket (1), a pneumatic plug (6) integral with a cable (7), said pneumatic plug (6) being designed to be connected to the pneumatic socket (2), a connected and unlocked position of the pneumatic plug (6) preventing the plugging in of the electrical plug (4), **characterised in that** it comprises means (22, 23) for preventing the plugging in of the electrical plug (4) if the angular orientation of the electrical plug (4) relative to the socket (1) around a plugging-in axis (18) of the electrical plug (4) is not correct.

2. The device according to claim 1, **characterised in that** the pneumatic plug (6) comprises a lock ring (10) on the pneumatic socket (2), and **in that** the electrical plug (4) is integral with the lock ring (10).

3. The device according to claim 2, **characterised in that** the pneumatic plug (6) plugs into the pneumatic socket (2) in a direction (13) that corresponds to an axis (14), **in that** the lock ring (10) is of the quick-lock type, **in that** the lock ring (10) can turn around the axis (14) between an unlocked position and a locked position, **in that** when the lock ring (10) is in the locked position a plugging-in axis (18) of the electrical plug (4) coincides with a plugging-in axis (20) of the electrical socket (1).

## Patentansprüche

1. Anschlussvorrichtung, umfassend eine Stromanschlussfassung (1) und eine Druckluftanschlussfassung (2), die beide an ein Gerät (3) angeformt sind, ein mit einem Kabel (5) einstückiger Stromanschlussstecker (4), wobei der Stromanschlussstecker (4) zum Anschließen an die Stromanschlussfassung (1) ausgelegt ist, ein mit einem Kabel (7) einstückiger Druckluftanschlussstecker (6), wobei der Druckluftanschlussstecker (6) zum Anschließen an die Druckluftanschlussfassung (2) ausgelegt ist, wobei eine angeschlossene und entriegelte Stellung des Druckluftanschlussteckers (6) das Einstecken des Stromanschlusssteckers (4) verhindert, **dadurch gekennzeichnet, dass** sie Mittel (22, 23) zum Verhindern des Einsteckens des Stromanschlusssteckers (4) aufweist, wenn die Winkelausrichtung des Stromanschlusssteckers (4) in Bezug auf die Fassung (1) um eine Einsteckachse (18) des Stromanschlusssteckers (4) nicht korrekt ist.

2. Vorrichtung nach Anspruch 1, **dadurch gekennzeichnet, dass** der Druckluftanschlussstecker (6) einen Arretierring (10) auf der Druckluftanschlussfassung (2) hat, und dadurch, dass der Stromanschlussstecker (4) einstückig mit dem Arretierring (10) ist.

3. Vorrichtung nach Anspruch 2, **dadurch gekennzeichnet, dass** der Druckluftanschlussstecker (6) in die Druckluftanschlussfassung (2) in einer Richtung (13) eingesteckt wird, die einer Achse (14) entspricht, dadurch, dass der Arretierring (10) vom Schnellverschlusstyp ist, dadurch, dass sich der Arretierring (10) um die Achse (14) zwischen einer entriegelten Position und einer verriegelten Position drehen kann, und dadurch, dass, wenn der Arretierring (10) in der verriegelten Position ist, eine Einsteckachse (18) des Stromanschlusssteckers (4) mit einer Einsteckachse (20) der Stromanschlussfassung (1) zusammenfällt.
